# EUROPEAN PATENT APPLICATION

(11) **EP 3 689 697 A1**
(43) Date of publication of application: **05.08.2020**
(21) Application number: 20154813.8
(22) Date of filing: 31.01.2020
(51) Int. Cl.: B60W 30/14, B60T 8/24, B60T 8/17, B60T 8/32

(54) **OFF-ROAD CONTROL BRAKE**

(30) Priority: 31.01.2019 US 201916264207
(71) Applicant: Volvo Car Corporation, 40531 Göteborg (SE)
(72) Inventor: Strandberg, Mats, 418 71 Göteborg (SE)
(74) Representative: Nederlandsch Octrooibureau

(57) **Abstract**

Receiving, by a control unit of a vehicle, an indication to operate the vehicle in an off-road control brake mode, determining, by the control unit, a current speed of the vehicle, and controlling, by the control unit and in response to the indication and the determined current speed, an electric motor of the vehicle to output forward torque or reverse torque to maintain the current speed of the vehicle between a first threshold speed and a second threshold speed, wherein the second threshold speed is higher than the first threshold speed.

## Description

### TECHNICAL FIELD

This disclosure relates to automotive control systems.

### BACKGROUND

Vehicles may be configured to operate in one of a plurality of software-controlled driving modes based on a user input. Example driving modes may include a regular driving mode, a power driving mode, a snow driving mode, a sand driving mode, and the like. When operating according to a regular driving mode, one or more control systems of the vehicle may control various components of the vehicle (e.g., internal combustion engine, electric motor, suspension, transmission, etc.) to operate according to default settings established by the manufacturer. When operating according to a power driving mode, one or more control systems of the vehicle may control various components of the vehicle to cause more aggressive acceleration. When operating according to a snow or sand driving mode, one or more control systems of the vehicle may control various components of the vehicle to accelerate and decelerate in a manner that results in a lower likelihood of traction loss.

### SUMMARY

In some situations, operators may desire to drive a vehicle off paved surfaces (e.g., off-road driving). Off-road driving often involves traversing over uneven surface such as rocks, vegetation, unmaintained tracks, and other obstacles. The sudden movements resulting from driving over uneven surfaces can cause rapid body movement of the vehicle. Such rapid movement may cause damage to the body of the vehicle, discomfort for the occupants, and/or loss of traction.

In view of the problems with off-road driving, this disclosure describes systems and techniques that may improve safety, mitigate damage to the vehicle, and/or improve occupant and operator comfort. In one example, this disclosure describes a software-initiated off-road control brake mode that may be used to increase the precision in driving a vehicle off-road. The operator of the vehicle may cause the vehicle to operate in an off-road control brake mode, e.g., through selection of a mechanical switch, a graphical user interface menu, and/or other similar types of inputs. When operating according to the off-road control brake mode, a control unit of the vehicle may control, adjust, and/or modulate an electric motor to maintain vehicle speed and/or acceleration within a predefined range. In other examples, the control unit may further control an internal combustion engine and/or wheel brakes to maintain vehicle speed and/or acceleration within a predefined range. In this way, sudden increases of speed or acceleration can be dampened.

In one example, this disclosure describes a method comprising receiving, by a control unit of a vehicle, an indication to operate the vehicle in an off-road control brake mode, determining, by the control unit, a current speed of the vehicle, and controlling, by the control unit and in response to the indication and the determined current speed, an electric motor of the vehicle to output forward torque or reverse torque to maintain the current speed of the vehicle between a first threshold speed and a second threshold speed, wherein the second threshold speed is higher than the first threshold speed. In some embodiments, the application of a wheel brake to limit the current speed of the vehicle below a first or second threshold can be automatically controlled by a processor. In further embodiments, the causing of reduction of output torque of an internal combustion engine of the vehicle to limit the current speed of the vehicle below a first or second threshold speed can be automatically controlled by a processor.

In another example, this disclosure describes a vehicle comprising an electric motor, and a control unit configured to control the electric motor, the control unit configured to receive an indication to operate the vehicle in an off-road control brake mode, determine a current speed of the vehicle, and control, in response to the indication and the determined current speed, the electric motor of the vehicle to output forward torque or reverse torque to maintain the current speed of the vehicle between a first threshold speed and a second threshold speed, wherein the second threshold speed is higher than the first threshold speed.

In another example, this disclosure describes a computer-readable storage medium storing instructions that, when executed by at least one processor of a computing device, cause the at least one processor to determine one or more of a current speed or a current acceleration of the vehicle; and adjust torque to an electric motor in response to one or more of the determined current speed or the determined current acceleration, wherein the torque is increased or decreased in relation to predetermined speed thresholds. Optionally, the computer-readable storage medium can also cause the at least one processor to receive an indication to operate a vehicle in an off-road control brake mode, determine a current speed of the vehicle, and control, in response to the indication and the determined current speed, the electric motor of the vehicle to output forward torque or reverse torque to maintain the current speed of the vehicle between a first threshold speed and a second threshold speed, wherein the second threshold speed is higher than the first threshold speed.

In another example, this disclosure describes a system comprising means for receiving an indication to operate a vehicle in an off-road control brake mode, means for determining a current speed of the vehicle, and means for controlling, in response to the indication and the determined current speed, an electric motor of the vehicle to output forward torque or reverse torque to maintain the current speed of the vehicle between a first threshold speed and a second threshold speed, wherein the second threshold speed is higher than the first threshold speed.

The details of one or more examples are set forth in the accompanying drawings and the description below. Other features, objects, and advantages will be apparent from the description, drawings, and claims.

### BRIEF DESCRIPTION OF DRAWINGS

FIG. 1 is a conceptual diagram illustrating an example vehicle that is configured to operate according to an off-road control brake mode, in accordance with one or more aspects of the present disclosure.
FIG. 2 is a conceptual block diagram illustrating an example vehicle system for selecting an off-road control brake mode, in accordance with one or more aspects of the present disclosure.
FIG. 3 is a flowchart illustrating example operations of a vehicle control unit according to one example of the disclosure.
FIG. 4 is a flowchart illustrating example operations of a vehicle control unit according to another example of the disclosure.
FIG. 5 is a flowchart illustrating example operations of a vehicle control unit according to another example of the disclosure.
FIG. 6 is a flowchart illustrating example operations of a vehicle control unit according to another example of the disclosure.

### DETAILED DESCRIPTION

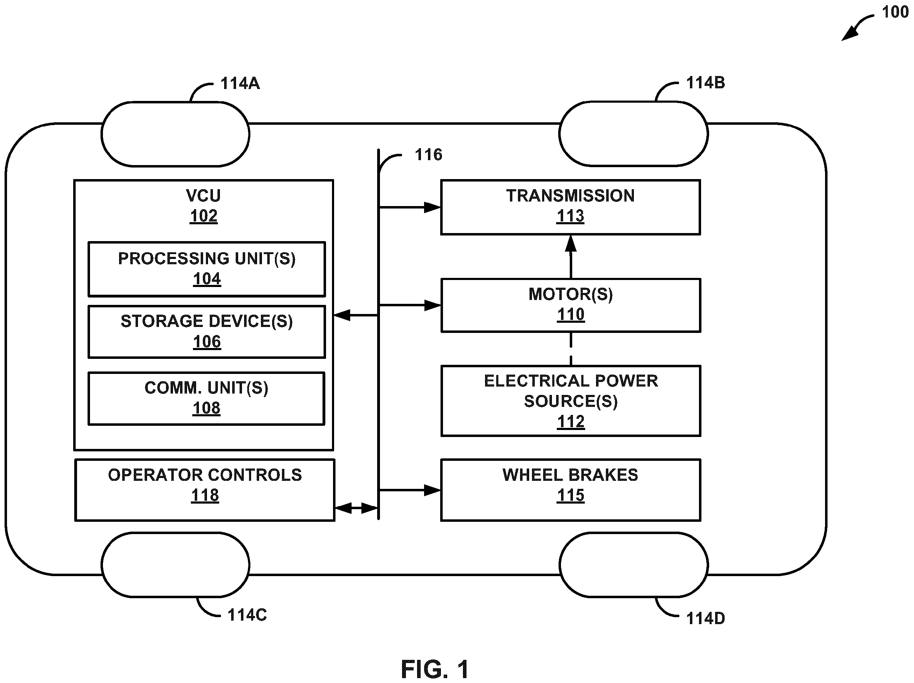

FIG. 1 is a conceptual block diagram illustrating an example vehicle 100, in accordance with one or more techniques of this disclosure. Vehicle 100 may include any type of autonomous, semi-autonomous, or non-autonomous vehicle. Examples of vehicle 100 include cars, trucks, buses, motorcycles, recreational vehicles (RVs), tractors, all-terrain vehicles, watercraft, or any other type of vehicle.

As shown in FIG. 1, vehicle 100 includes at least one vehicle control unit (VCU) 102, one or more motors 110, transmission 113, wheel brakes 115, one or more electrical power sources 112, and operator controls 118. Motors 110 are physically coupled to wheels 114A-114D (collectively, wheels 114) to propel vehicle 100 along a vehicle pathway (e.g., a road). Motors 110 may include an internal combustion engine (ICE), one or more electric motors (EM), or a combination therein (e.g., vehicle 100 may be a hybrid vehicle). In some examples, motors 110 receive electrical power from one or more electrical power sources 112 and/or provide electrical power to electrical power sources 112. In some examples, one or more of motors 110 (e.g., an ICE) may be connected to wheels 114 through transmission 113. In some examples, if vehicle 100 only includes electric motors, a transmission may not be necessary.

Transmission 113 may be any type of vehicle transmission, including an automatic transmission, a manual gearbox, a continuously variable transmission (CVT), and the like. Wheel brakes 115 may be any type of wheel braking system including disc brakes, drum brakes, other friction brakes, and/or electro-mechanical brakes. Operator controls 118 may include one or more pedals, levers, steering mechanisms, switches, touchscreens, or the like that an operator may use to control the functionality of the vehicle. For example, operator controls 118 may include an accelerator pedal and a brake pedal. In examples of this disclosure, as will be outlined, VCU 102 may receive inputs from operator controls 118 and control the operations of motors 110 and/or wheel brakes 115 to operator in accordance with off-road brake mode of this disclosure.

Electrical power sources 112 provide electrical power to one or more electrical components of vehicle 100, such as VCU 102, motors 110, an instrument cluster, display device, or any other component of vehicle 100 that utilizes electricity. Example electrical power sources 112 include an alternator or a battery. In some examples, a battery may store approximately 12V to approximately 48V. In some examples, such as examples where vehicle 100 is a hybrid or fully electric vehicle, electrical power sources 112 may include battery pack that includes a plurality of battery cells and may store hundreds or potentially thousands of volts.

VCU 102 includes at least one processing unit 104, at least one storage device 106, and at least one communication unit 108. VCU 102 controls one or more systems of vehicle 100, e.g., by sending commands and/or instructions to one or more systems of vehicle 100. As one example, VCU 102 may control one or more motors 110, transmission 113, or other system of vehicle 100. In some examples, VCU 102 may represent any combination of an engine control unit, a transmission control unit, a powertrain control module, a brake control unit, or a speed control unit, among others.

Processing unit 104 may be implemented as fixed-function processing circuits, programmable processing circuits, or a combination thereof. Fixed-function circuits refer to circuits that provide particular functionality and are pre-set on the operations that can be performed. Programmable circuits refer to circuits that can programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function processing circuits perform are generally immutable. In some examples, the one or more of the units may be distinct circuit blocks (fixed-function or programmable), and in some examples, the one or more units may be integrated circuits.

In some examples, storage device 106 may be a temporary memory, meaning that a primary purpose of storage device 106 is not long-term storage. Storage device 106 may be configured for short-term storage of information as volatile memory and therefore not retain stored contents if powered off. Examples of volatile memories include random access memories (RAM), dynamic random-access memories (DRAM), static random-access memories (SRAM), and other forms of volatile memories known in the art.

Storage device 106 may include one or more non-transitory computer-readable storage devices. Storage device 106 may be configured to store larger amounts of information than typically stored by volatile memory. Storage device 106 may further be configured for long-term storage of information as non-volatile memory space and retain information after power on/off cycles. Examples of non-volatile memories include magnetic hard discs, optical discs, flash memories, or forms of electrically programmable memories (EPROM) or electrically erasable and programmable (EEPROM) memories. Storage device 106 may store program instructions and/or information (e.g., data) that, when executed, cause processing unit 104 to perform the techniques of this disclosure.

One or more communication units 108 of VCU 102 may communicate with other VCUs 102 of vehicle 100 and/or computing devices physically distinct from vehicle 100 (e.g., cloud computing devices). Communication units 108 include wired and/or wireless communication units. For example, communication units 108 of VCU 102 may transmit data and/or receive data via a Controller Area Network (CAN) bus that communicatively couples VCUs 102 and/or other various components of vehicle 100 (e.g., sensors). As another example, communication units 108 may include GPS radios, cellular (e.g., LTE) radios, Bluetooth™ radios, WiFi™ radios, or any other wireless radios.

Control network 116 may interconnect VCU 102, motors 110, transmission 113, and wheel brakes 115 for inter-component communications (physically, communicatively, and/or operatively). In some examples, control network 116 includes a system bus configured to exchange information or data between components VCU 102, motors 110, transmission 113, and wheel brakes. For example, control network 116 may exchange information between VCU 102, motors 110, and transmission 113 according to any communication protocol, such as a controller area network (CAN) bus protocol, media-oriented systems transport (MOST) protocol, transmission control protocol (TCP), among others. As one example, VCU 102 may output commands to motor 110 to control one or more operational characteristics (e.g., engine speed, forward torque of an electric motor, reverse torque of an electric motor, output torque of an ice, application of wheel breaks, throttle valve position, among others) of motors 110 via control network 116.

In some situations, operators may desire to drive vehicle 100 off of paved surfaces (e.g., off-road driving). Off-road driving often involves traversing over uneven surface such as rocks, vegetation, unmaintained tracks, and other obstacles. The sudden movements resulting from driving over very uneven surfaces can cause rapid body movement of vehicle 100. Such rapid movement may cause damage to the body of the vehicle, discomfort for the occupants, and/or loss of traction.

In view of the problems with off-road driving, this disclosure describes systems and techniques that may improve safety, mitigate damage to vehicle 100, and/or improve occupant and operator comfort through operation according to an off-road control brake mode which. For example, VCU 102 may be configured to control one or more components of vehicle 100 to operate according to an off-road control brake mode, which is a software function that can be activated by an operator of vehicle 100. In one example of the disclosure, when operating according to the off-road control brake mode, VCU 102 is configured to control components of vehicle 100 (e.g., motors 110 and/or wheel brakes 115) to limit the speed vehicle 100 speed to predefined speed range. The predefined speed range may be operator-adjusted or as set by the manufacturer. As will be explained below, VCU 102 may control components of vehicle 100 to limit vehicle speed to a predefined range by causing one or more of braking with an electric motor of motors 110, limiting the torque request to the ICE of motors 110, regulating forward or reverse torque of an electric motor of motors 110, and/or applying wheel brakes 115. This means that for constant accelerator input the electric drivetrain may go from driving the vehicle forward to braking the vehicle depending on road grade or obstacles

When operating according to the off-road control brake mode, VCU 102 is configured to cause components of vehicle 100 to dampen changes in vehicle speed to control the behaviour of the suspension and body over rough terrain. If a vehicle operator drives slowly over a "sharp" obstacle like a rock, for example, the operator may need to apply a significant amount of accelerator pedal input to climb over the obstacle. Typically, vehicle 100 would then accelerate quickly once over the top of the obstacle. When vehicle 100 drivers over the obstacle and one or more wheels 114 drop away quickly, the suspension will compress more once vehicle 100 hits the ground. This may also increase the likelihood to hit damage the sill of vehicle 100 on the obstacle. In the same way, driving down a slope too fast may cause vehicle 100 to damage the front overhang on the ground when vehicle 100 reaches the bottom of the slope. When operating according to the off-road control brake mode, VCU 102 will keep vehicle 102 at a moderate pace to mitigate these situations. As will be explained below, when VCU 102 is operating according to the off-road control brake mode, the operator will not have to move their foot between the accelerator and brake pedal to slow vehicle 100, unless the operator want to stop vehicle 100.

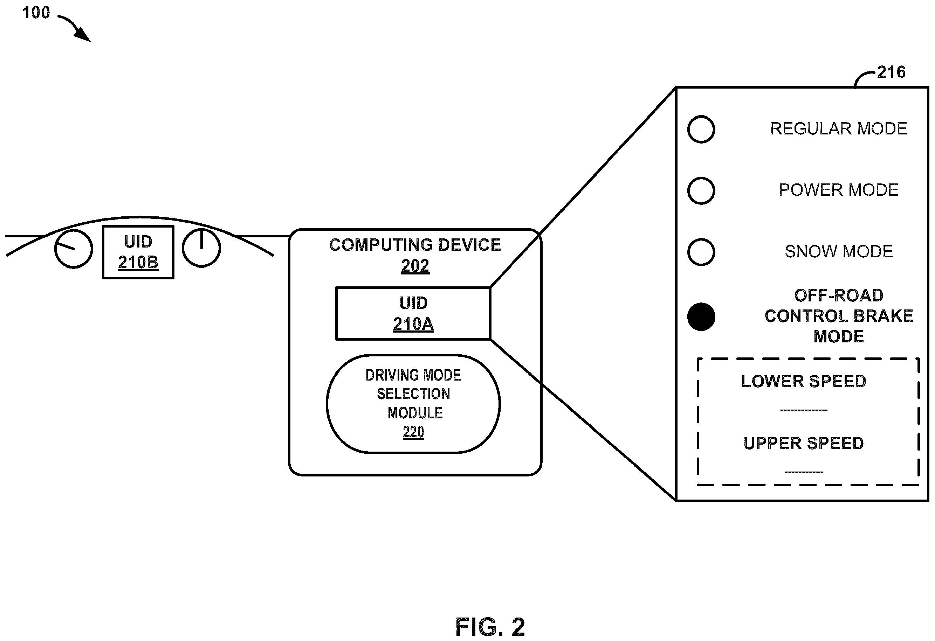

In one example of the disclosure, VCU 102 may be configured to receive an indication to operate vehicle 100 in an off-road control brake mode. The operator of vehicle 100 may cause VCU 102 to operate in an off-road control brake mode, e.g., through selection of a drive mode selector, a software button, a mechanical switch, a graphical user interface menu, and/or other similar types of inputs. Techniques and systems for selecting the off-road control brake mode are discussed in more detail below with reference to FIG. 2.

Once operating according to the off-road control brake mode, VCU 102 may be configured to determine the current speed of vehicle 100. Any technique may be used for determining the current speed, including the use of speedometers, yaw-rate sensors, angular velocity sensors, radar, position-location sensors (e.g., GPS), and the like.

In one example, VCU 102 may then control, in response to the indication to operate according to the off-road control brake and the determined current speed, an electric motor of motors 110 of vehicle 100 to output forward torque or reverse torque to maintain the current speed of vehicle between 100 a first threshold speed and a second threshold speed. In this example, the second threshold speed (e.g., an upper threshold) is higher than the first threshold speed (e.g., a lower threshold speed).

As one example, assuming vehicle 100 is operating in forward drive mode (i.e., not reverse), VCU 102 may determine that vehicle 100 has a speed that is greater than the upper threshold speed, and in response, may cause an electric motor of motors 110 to output reverse torque in order to reduce the speed of vehicle 100 to below the upper threshold speed. In some examples, the reverse torque output by the electric motor may be counteracting an ICE (e.g., in a hybrid vehicle) and/or counteracting accelerator pedal input by the user. In some examples, VCU 102 may determine the difference between the current speed of vehicle 100 and the upper threshold speed. Based on this difference, VCU 102 may determine an amount of reverse torque that will be output by the electric motor of motors 110. VCU 102 may continue to cause the electric motor to output reverse torque until the speed of vehicle 100 is below or equal to the upper threshold speed.

As another example, again assuming vehicle 100 is operating in forward drive mode (i.e., not reverse), VCU 102 may determine that vehicle 100 has a speed that is less than the lower threshold speed, and in response, may cause an electric motor of motors 110 to output forward torque in order to increase the speed of vehicle 100 to above the lower threshold speed. In some examples, the reverse torque output by the electric motor may be augmenting an ICE (e.g., in a hybrid vehicle) and/or augmenting accelerator pedal input by the operator. That is, VCU 102 may cause an electric motor of motors 110 to output more forward torque than is requested by the operator through engagement with the accelerator pedal. In some examples, VCU 102 may determine the difference between the current speed of vehicle 100 and the lower threshold speed. Based on this difference, VCU 102 may determine an amount of forward torque that will be output by the electric motor of motors 110. VCU 102 may continue to cause the electric motor to output forward torque until the speed of vehicle 100 is above the threshold speed.

As will be explained in more detail below with reference to FIG. 2, in some examples, VCU 102 may be configured to receive an input from the operator of vehicle 100 that indicates the first threshold speed (i.e., the lower threshold speed) and the second threshold speed (i.e., the upper threshold speed). In other examples, the lower threshold speed and the upper threshold speed may be predetermined by the manufacturer. As one example, the lower threshold speed may be zero (0) Km/H and the upper threshold speed may be ten (10) Km/h. In other examples, the lower threshold speed may be non-zero (e.g., greater than 0 Km/H). However, any range of threshold speeds may be used.

In previous examples, VCU 102 causes an electric motor of motors 110 to output forward or reverse torque to maintain the speed of vehicle 100 within the defined threshold speeds. In other examples of the disclosure, VCU 102 may control other systems of vehicle 100 to maintain speed within the defined threshold speeds, including controlling the function of wheel brakes 115 and controlling the output torque of ICE of motors 110. VCU 102 may be configured to control any combination of systems of vehicle 100 to maintain speed between the defined threshold speeds. For example, VCU 102 may control an electric motor alone or may control the electric motor in combination with one or of the wheel brakes and/or ICE.

In one example of the disclosure, VCU 102 may determine that vehicle 100 has a speed that is greater than the upper threshold speed, and in response, may cause an electric motor of motors 110 to output reverse torque in order to reduce the speed of vehicle 100 to below the upper threshold speed. In addition, VCU 102 may also, contemporaneously with causing the electric motor to output reverse torque, VCU 102 may also cause wheel brakes 115 to automatically apply the at least one wheel brake to limit the current speed of the vehicle below the second threshold speed. Braking may be applied until the speed of vehicle 100 is less than the upper threshold speed, at which time VCU 102 may disengage wheel brakes 115.

Similarly, in another example of the disclosure, VCU 102 may determine that vehicle 100 has a speed that is greater than the upper threshold speed, and in response, may cause an electric motor of motors 110 to output reverse torque in order to reduce the speed of vehicle 100 to below the upper threshold speed. In addition, VCU 102 may also, contemporaneously with causing the electric motor to output reverse torque, cause an ICE of motors 115 to automatically cause a reduction of output torque of the ICE of the vehicle to limit the current speed of vehicle 100 below the upper threshold speed. VCU 102 may continue to instruct the ICE to reduce output torque until the speed of vehicle 100 is less than the upper threshold speed, at which time VCU 102 may allow the ICE to return to normal operation. For example, responsive to determining that the current speed of vehicle 100 is between the upper threshold and the lower threshold, VCU 102 may control the electric motor to discontinue outputting the reverse torque.

In another example of the disclosure, VCU 102 may determine that vehicle 100 has a speed that is less than the lower threshold speed, and in response, may cause an electric motor of motors 110 to output forward torque in order to increase the speed of vehicle 100 to above the lower threshold speed. In addition, VCU 102 may also, contemporaneously with causing the electric motor to output forward torque, cause an ICE of motors 115 to automatically cause an increase of output torque of the ICE of the vehicle to raise the current speed of vehicle 100 above the lower threshold speed. VCU 102 may continue to instruct the ICE to increase output torque until the speed of vehicle 100 is greater than the lower threshold speed, at which time VCU 102 may allow the ICE to return to normal operation.

In previous examples, VCU 102 is configured to control one or more systems of vehicle 100 to keep the speed of vehicle 100 within a defined speed range. In other examples of the disclosure, VCU 102 may be configured to control one or more systems of vehicle 100 to keep the acceleration of vehicle 100 within a predefined acceleration range. VCU 102 may be configured to control for acceleration or may control for both acceleration and speed simultaneously. Like when controlling for speed, VCU 102 may control an electric motor of motors 110, an ICE of motors 110, and/or wheel brakes such that VCU 102 maintains an acceleration of vehicle between an upper acceleration threshold and a lower acceleration threshold. In general, VCU 102 may be configured to determine a current acceleration of the vehicle, and control, in response to the indication to use the off-road control brake mode and the determined current acceleration, an electric motor of vehicle 100 to output forward torque or reverse torque to limit the current acceleration of vehicle 100 between a first threshold acceleration (e.g., a lower acceleration threshold) and a second threshold acceleration (e.g., an upper acceleration threshold).

FIG. 2 is a conceptual block diagram illustrating an example vehicle information system that is configured to receive an operator selection of the off-road control brake mode, in accordance with one or more aspects of the present disclosure. Computing device 202 may be configured to provide information to and receive inputs from one or more occupants of vehicle 100. For example, computing device 202 may execute one or more applications that provide information to the occupants of the vehicle, such as vehicle information (e.g., speed, RPMs, fuel indicators), traffic and/or navigation information, multimedia information (e.g., audio and/or video), among others.

In the example of FIG. 2, computing device 202 includes one or more user interface devices 210 and driving mode selection module 220. User interface devices (UIDs) 210A-210B (collectively, UIDs 210) may enable an occupant of vehicle 100 to interact with computing device 202. UIDs 210 may function as an input device and/or an output device for computing device 202. In instances where UIDs 210 function as input devices, UIDs 210 may include touch-sensitive input devices, presence-sensitive input devices, track pads, microphones, physical buttons or knobs, infrared sensors, software buttons among others. In instances where UIDs 210 function as an output device, UIDs 210 may include display devices, speakers, haptic feedback technologies, among others. Display devices may include touchscreens (e.g., capacitive or resistive). Example display devices include liquid crystal displays (LCD), light emitting diode (LED) displays, organic light-emitting diode (OLED) displays, e-ink, or other device configured to display information to an occupant of vehicle 100. In instances where UIDs 210 function as both input and output devices, UIDs 210 may include any combination of input and output devices described above. As illustrated in the example of FIG. 2, UID 210A is located in a center console of vehicle 100 and UID 210B is located in a dashboard of vehicle 100. In another example, UIDs 210 may be located in a heads-up display, a mirror (e.g., a rear-view mirror or a side mirror), a head rest, among other locations.

UID 210A may display user interface 216. User interface 216 is a graphical user interface that includes textual and graphical elements associated with functionality of one or more applications executing at computing device 202. In various examples, a user may provide a user input that corresponds to a location of user interface 216 at which a textual or graphical element is located. UID 210A may provide an indication of the location of the user input to the corresponding application associated with the selected element. In this way, user interface 216 may enable a user to provide inputs to and control the operation of applications executing at computing device 202.

Driving mode selection module 220 may cause UID 210A to display a user interface 216 with a plurality of driving mode selections. Driving mode selection module 120 may perform the operations described using hardware, firmware executing on hardware, software executing on hardware, or a combination thereof. Computing device 202 may execute driving mode selection module 220 using one or more processing units.

In accordance with techniques of this disclosure, driving mode selection module 220 may cause UID 210A to display a plurality of selectable driving modes on user interface 216, including an off-road control brake mode. An operator of vehicle 100 may select the off-road control brake mode using any of the techniques above. Response to detecting a user input selectin the off-road control brake mode, computing device 202 may communicate the selection to VCU 102. Based on the selection, VCU 102 may control vehicle 100 according to the off-road control brake techniques described above. Similarly, if an operator deselects the off-road control brake mode, or selects a different driving mode, computing device 202 may communicate the deselection to VCU 102. In response, VCU 102 will cease operation according to the off-road control brake mode.

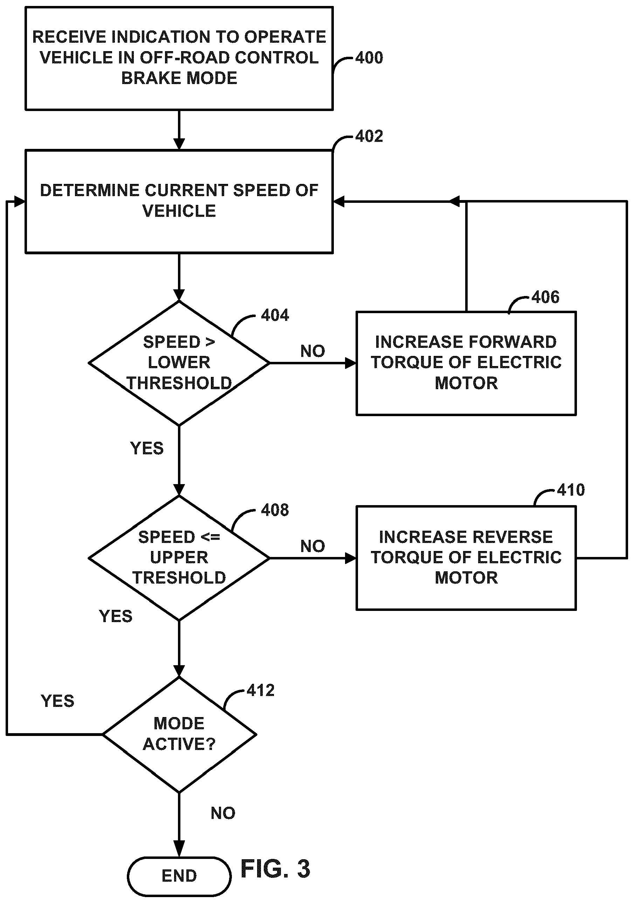

FIG. 3 is a flowchart illustrating example operations of a vehicle control unit according to one example of the disclosure. VCU 102 of FIG. 1 may be configured to perform the techniques of FIG. 3. In other examples, the techniques of FIG. 3 may be performed by any number or combination of control units, processors, FPGAs, or other control systems. FIG. 3 shows one example of how VCU 102 may operate vehicle 100 according to an off-road control brake mode by controlling the operation of an electric motor of motors 110 to maintain the speed of vehicle 100 within a defined ranged.

VCU 102 may be configured to receive an indication to operate vehicle 100 in an off-road control brake mode (400). In response, VCU 102 may be configured to determine a current speed of vehicle 100 (402). VCU 102 may then compare the determined speed of vehicle 100 to a lower threshold speed (404). If the current speed is not greater than the lower threshold speed, VCU 102 may cause an electric motor of motors 110 to increase forward torque output (406). VCU 102 then returns to determining the current speed of vehicle 100 (402).

If the current speed of vehicle 100 is greater than the lower threshold speed, VCU 102 then compares the determined speed of vehicle 100 to an upper threshold speed (408). If the current speed of vehicle 100 is not less than or equal to the upper threshold speed, VCU 102 causes an electric motor of motors 110 to increase reverse torque output (410). VCU 102 then returns to determining the current speed of vehicle 100 (402). If the determined speed of vehicle 100 is less than or equal to the upper threshold speed, VCU 102 then determines if the off-road control brake mode is still active (412). If yes, VCU 102 then returns to determining the current speed of vehicle 100 (402). If no, the process ends. It should be understood that the order of threshold speed comparisons (techniques 404 and 408) may swapped in other examples.

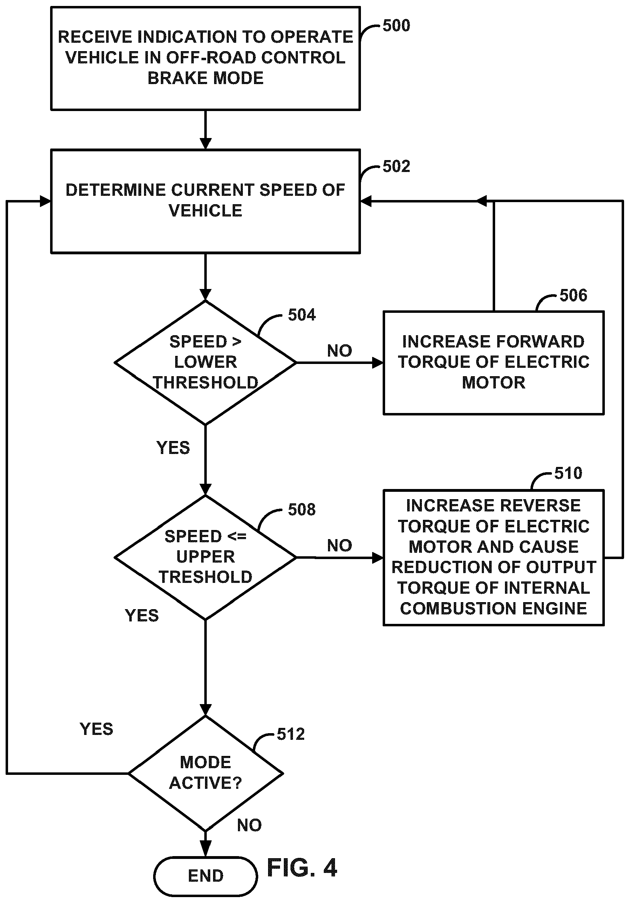

FIG. 4 is a flowchart illustrating example operations of a vehicle control unit according to another example of the disclosure. VCU 102 of FIG. 1 may be configured to perform the techniques of FIG. 4. In other examples, the techniques of FIG. 4 may be performed by any number or combination of control units, processors, FPGAs, or other control systems. FIG. 4 shows one example of how VCU 102 may operate vehicle 100 according to an off-road control brake mode by controlling the operation of an electric motor and an ICE of motors 110 to maintain the speed of vehicle 100 within a defined ranged.

VCU 102 may be configured to receive an indication to operate vehicle 100 in an off-road control brake mode (500). In response, VCU 102 may be configured to determine a current speed of vehicle 100 (502). VCU 102 may then compare the determined speed of vehicle 100 to a lower threshold speed (504). If the current speed is not greater than the lower threshold speed, VCU 102 may cause an electric motor of motors 110 to increase forward torque output (506). VCU 102 then returns to determining the current speed of vehicle 100 (502).

If the current speed of vehicle 100 is greater than the lower threshold speed, VCU 102 then compares the determined speed of vehicle 100 to an upper threshold speed (508). If the current speed of vehicle 100 is not less than or equal to the upper threshold speed, VCU 102 causes an electric motor of motors 110 to increase reverse torque output (510). In addition, VCU 102 may cause an ICE of motors 110 to contemporaneously reduce output torque. VCU 102 then returns to determining the current speed of vehicle 100 (502). If the determined speed of vehicle 100 is less than or equal to the upper threshold speed, VCU 102 then determines if the off-road control brake mode is still active (512). If yes, VCU 102 then returns to determining the current speed of vehicle 100 (502). If no, the process ends. It should be understood that the order of threshold speed comparisons (techniques 504 and 508) may swapped in other examples.

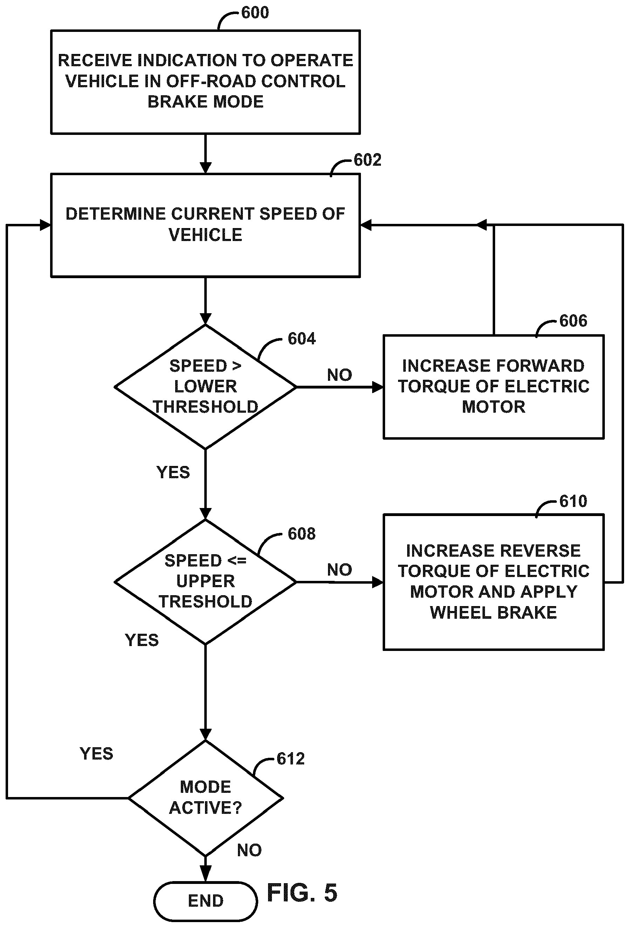

FIG. 5 is a flowchart illustrating example operations of a vehicle control unit according to another example of the disclosure. VCU 102 of FIG. 1 may be configured to perform the techniques of FIG. 5. In other examples, the techniques of FIG. 5 may be performed by any number or combination of control units, processors, FPGAs, or other control systems. FIG. 5 shows one example of how VCU 102 may operate vehicle 100 according to an off-road control brake mode by controlling the operation of an electric motor of motors 110 and at least one wheel brake of wheel brakes 115 to maintain the speed of vehicle 100 within a defined ranged.

VCU 102 may be configured to receive an indication to operate vehicle 100 in an off-road control brake mode (600). In response, VCU 102 may be configured to determine a current speed of vehicle 100 (602). VCU 102 may then compare the determined speed of vehicle 100 to a lower threshold speed (604). If the current speed is not greater than the lower threshold speed, VCU 102 may cause an electric motor of motors 110 to increase forward torque output (606). VCU 102 then returns to determining the current speed of vehicle 100 (602).

If the current speed of vehicle 100 is greater than the lower threshold speed, VCU 102 then compares the determined speed of vehicle 100 to an upper threshold speed (608). If the current speed of vehicle 100 is not less than or equal to the upper threshold speed, VCU 102 causes an electric motor of motors 110 to increase reverse torque output (610). In addition, VCU 102 may also apply at least one wheel brake of wheel brakes 115. VCU 102 then returns to determining the current speed of vehicle 100 (602). If the determined speed of vehicle 100 is less than or equal to the upper threshold speed, VCU 102 then determines if the off-road control brake mode is still active (612). If yes, VCU 102 then returns to determining the current speed of vehicle 100 (602). If no, the process ends. It should be understood that the order of threshold speed comparisons (techniques 604 and 608) may swapped in other examples.

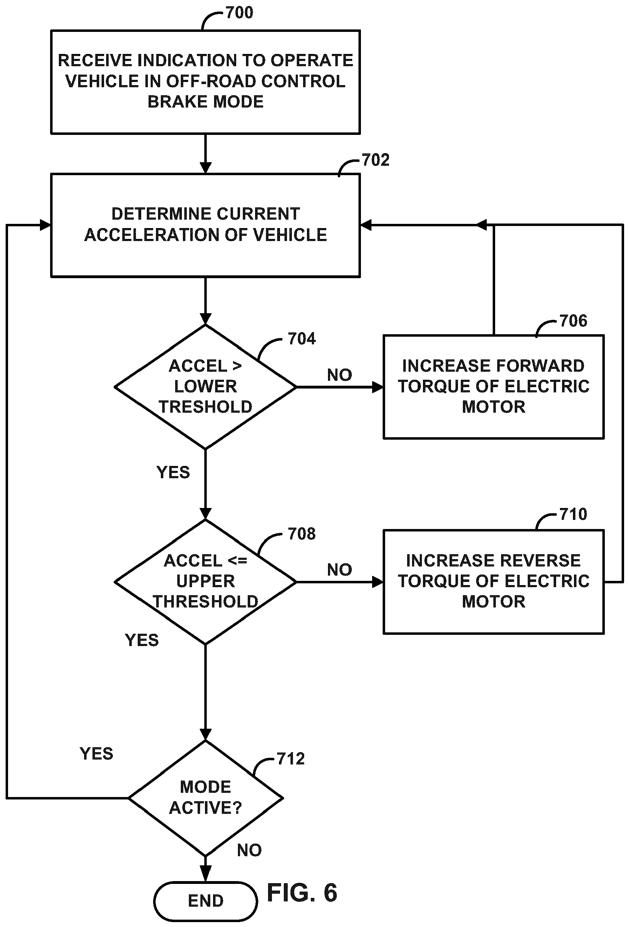

FIG. 6 is a flowchart illustrating example operations of a vehicle control unit according to another example of the disclosure. VCU 102 of FIG. 1 may be configured to perform the techniques of FIG. 6. In other examples, the techniques of FIG. 6 may be performed by any number or combination of control units, processors, FPGAs, or other control systems. FIG. 6 shows one example of how VCU 102 may operate vehicle 100 according to an off-road control brake mode by controlling the operation of an electric motor of motors 110 to maintain the acceleration of vehicle 100 within a defined ranged.

VCU 102 may be configured to receive an indication to operate vehicle 100 in an off-road control brake mode (700). In response, VCU 102 may be configured to determine a current acceleration (accel) of vehicle 100 (702). VCU 102 may then compare the determined acceleration of vehicle 100 to a lower threshold acceleration (704). If the current acceleration is not greater than the lower threshold acceleration, VCU 102 may cause an electric motor of motors 110 to increase forward torque output (706). VCU 102 then returns to determining the current acceleration of vehicle 100 (702).

If the current acceleration of vehicle 100 is greater than the lower threshold acceleration, VCU 102 then compares the determined acceleration of vehicle 100 to an upper threshold acceleration (708). If the current acceleration of vehicle 100 is not less than or equal to the upper acceleration speed, VCU 102 causes an electric motor of motors 110 to increase reverse torque output (710). VCU 102 then returns to determining the current acceleration of vehicle 100 (702). If the determined acceleration of vehicle 100 is less than or equal to the upper threshold acceleration, VCU 102 then determines if the off-road control brake mode is still active (712). If yes, VCU 102 then returns to determining the current acceleration of vehicle 100 (702). If no, the process ends. It should be understood that the order of threshold speed comparisons (techniques 704 and 708) may swapped in other examples.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A device (102) for operating a vehicle in an off-road control brake mode, the device comprising:
means for determining one or more of a current speed or a current acceleration of the vehicle; and
means for adjusting torque to an electric motor in response to one or more of the determined current speed or the determined current acceleration, wherein the torque is increased or decreased in relation to predetermined speed thresholds.

2. The device (102) of claim 1, wherein the off-road control brake mode is a user selectable driving mode.

3. The device (102) of any of the preceding claims, further comprising:
means for receiving an indication to operate the vehicle in the off-road control brake mode;
means for controlling, in response to the indication and the determined current speed, the electric motor of the vehicle to output forward torque or reverse torque to maintain the current speed of the vehicle between a first threshold speed and a second threshold speed, wherein the second threshold speed is higher than the first threshold speed.

4. The device (102) of claim 3, further comprising:
means for controlling, responsive to determining that the current speed of the vehicle is above the second threshold speed, the electric motor of the vehicle to output reverse torque to limit the current speed of the vehicle below the second threshold speed.

5. The device (102) of claim 4, further comprising:
means for automatically applying a wheel brake to limit the current speed of the vehicle below the second threshold speed.

6. The device (102) of claim 4, further comprising:
means for automatically causing a reduction of output torque of an internal combustion engine of the vehicle to limit the current speed of the vehicle below the second threshold speed.

7. The device (102) of any of the preceding claims, wherein the device (102) comprises:
a memory (106); and
a processor (104) in communication with the memory, the processor configured to:
determine the one or more of a current speed or a current acceleration of the vehicle; and
adjust the torque to an electric motor in response to one or more of the determined current speed or the determined current acceleration, wherein the torque is increased or decreased in relation to predetermined speed thresholds.

8. The device (102) of claim 7, wherein the processor (104) is further configured to:
receive an indication to operate the vehicle in the off-road control brake mode;
control, in response to the indication and the determined current speed, the electric motor of the vehicle to output forward torque or reverse torque to maintain the current speed of the vehicle between a first threshold speed and a second threshold speed, wherein the second threshold speed is higher than the first threshold speed.

9. The device (102) of claim 8, wherein, responsive to determining that the current speed of the vehicle is above the second threshold speed, the processor (104) is further configured to:
control the electric motor of the vehicle to output reverse torque to limit the current speed of the vehicle below the second threshold speed.

10. A method of controlling a vehicle in an off-road control brake mode, the method comprising:
determining one or more of a current speed or a current acceleration of the vehicle; and
adjusting torque to an electric motor in response to one or more of the determined current speed or the determined current acceleration, wherein the torque is increased or decreased in relation to predetermined speed thresholds.

11. The method of claim 10, wherein the off-road control brake mode is a user selectable driving mode.

12. The method of claim any of claims 10-11, further comprising:
receiving an indication to operate the vehicle in the off-road control brake mode;
controlling, in response to the indication and the determined current speed, the electric motor of the vehicle to output forward torque or reverse torque to maintain the current speed of the vehicle between a first threshold speed and a second threshold speed, wherein the second threshold speed is higher than the first threshold speed.

13. The method of claim 12, responsive to determining that the current speed of the vehicle is above the second threshold speed, the method further comprising:
controlling the electric motor of the vehicle to output reverse torque to limit the current speed of the vehicle below the second threshold speed.

14. The method of claim 13, further comprising:
automatically applying a wheel brake to limit the current speed of the vehicle below the second threshold speed.

15. The method of claim 14, further comprising:
automatically causing a reduction of output torque of an internal combustion engine of the vehicle to limit the current speed of the vehicle below the second threshold speed.
